(19) Europäisches Patentamt
European Patent Office
Office européen des brevets

(11) Publication number: **0 467 549 A2**

(12) **EUROPEAN PATENT APPLICATION**

(21) Application number: **91305975.4**

(22) Date of filing: **02.07.91**

(51) Int. Cl.[5]: **C09K 21/00**, C08K 3/00, C08K 13/02, C08L 23/20, //(C08K13/02,3:00,5:09)

(30) Priority: **20.07.90 GB 9016028**

(43) Date of publication of application: **22.01.92 Bulletin 92/04**

(84) Designated Contracting States: **AT BE CH DE DK ES FR GB GR IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Stewart, David**
**21 Clifton Crescent, Heyside**
**Royton, Oldham, Lancashire OL2 6JF(GB)**
Inventor: **Whitehouse, Robert Sydney**
**90 Bolton Road North, Edenfield**
**Bury, Lancashire BL0 0LT(GB)**

(74) Representative: **Pugsley, Roger Graham et al**
**IMPERIAL CHEMICAL INDUSTRIES PLC Legal Department: Patents PO Box 6 Bessemer Road**
**Welwyn Garden City Herts, AL7 1HD(GB)**

(54) **Inorganic solid and polymer composition.**

(57) A particulate inorganic solid, especially hydrated alumina or magnesium hydroxide, which has been treated with a specified di-carboxylic acid or anhydride, for example a long chain alkyl or alkenyl succinic acid or anhydride. The treated solid may be incorporated into a polymer especially a thermoplastic polymer such as polypropylene. Alternatively, the solid, the di-carboxylic acid or anhydride and the polymer can be blended together. The composition obtained can be processed even when containing 70% by weight of the inorganic solid.

EP 0 467 549 A2

The present invention relates to inorganic solids and to polymer compositions, particularly olefin polymer compositions, which contain such inorganic solids.

In recent years there has been increasing interest in polymer compositions containing a high proportion, for example at least 30% by weight, of an inorganic solid. Depending on the inorganic solid used, the composition may be used as an insulator, or outer sheath, for electric conductors; or as a sound deadening material; or in an application in which improved mechanical properties are desired. The presence of high levels of an inorganic solid reduces the processibility of the composition, and this is undesirable if the composition is to be used in an injection moulding or extrusion process. The processibility can be improved by using higher processing temperatures but this can cause problems with compositions containing flame retardant additives or free radical generators such as peroxides. Processibility can be improved by the use of processing aids. However, with low levels of processing aid the improvement achieved is not entirely satisfactory whereas with higher levels of processing aid the mechanical properties of the composition, for example the flexural and impact properties, are adversely affected. Furthermore, the processing aid is generally more flammable than the inorganic solid and hence higher levels of the processing aid are particularly undesirable in compositions intended to possess fire retardant characteristics. It is therefore desirable to provide a polymer composition having a high level of an inorganic solid, that is at least 30% by weight, and having an improved processibility. This is particularly desirable if the inorganic solid is a material such as hydrated alumina which is used to provide fire retardancy and is desirably present in the polymer composition at a level of at least 50% by weight and especially about 70% by weight.

According to the present invention there is provided a composition comprising a particulate inorganic solid and 0.1 up to 20% by weight, relative to the particulate inorganic solid, of a di-carboxylic acid or anhydride thereof having an aliphatic chain containing up to 204 carbon atoms selected from

a) a diacid or anhydride thereof of the general formula (I)

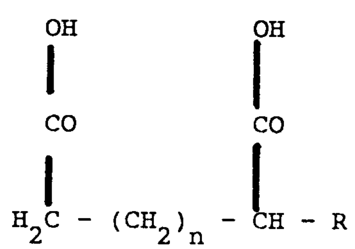

(I)

or

b) a monocyclic aromatic diacid or anhydride thereof having at least one aliphatic substituent; wherein;

R is a saturated or unsaturated aliphatic group containing up to 200 carbon atoms; and

n is zero, one or two.

Throughout this specification the term "diacid" will be used to indicate the dicarboxylic acid or anhydride thereof and a mixture of such discarboxylic acids or anhydrides as hereinafter described.

Preferably the diacid contains at least eight carbon atoms.

In the diacid of the general formula (I), the value of n is preferably less than two and particularly the value of n is zero.

The group R preferably contains at least ten carbon atoms. The acid of general formula (I) may be of relatively low molecular weight and in such compounds the group R contains not more than 30 carbon atoms, for example not more than 24 carbon atoms and conveniently not more than 20 carbon atoms. Alternatively, the diacid of general formula (I) is one in which the group R is derived from a polymeric material, for example a polymer of one or more mono-olefins, and the polymer chain in such a material typically contains, on average at least 40 carbon atoms and up to 200 carbon atoms, more preferably up to 100 carbon atoms. The polymer chain conveniently has an average molecular weight of at least 1000 and especially at least 700. A preferred polymer chain is derived from an isobutylene polymer. The group R can be a saturated aliphatic group or can be an unsaturated group which contains at least one unsaturated, double or triple, bond. Although the group R may contain two or more unsaturated bonds, groups containing only one double bond are generally more readily available and hence it is convenient that if R is an unsaturated group it is a group containing one double bond. By way of example of groups represented by R which contain a double bond there may be mentioned allyl, decenyl, heptadecenyl, octadecenyl, penta-1,3-dienyl, hexa-2,4-dienyl, heptadeca-8,11-dienyl and octadeca-9,12-dienyl groups.

The group R can be a linear or branched aliphatic group and typically is a branched chain group. The composition may comprise a plurality of diacids of either or both of (a) and (b) which differ in the identity of the group R. The different R groups may be different isomers, for example, different branched chain isomers and/or may contain different number of carbon atoms, for example, alkyl or alkenyl groups having 12 to 16 or 12 to 14 carbon atoms.

The diacid of general formula (I) is conveniently a succinic acid derivative.

If the diacid is an aromatic acid, it is preferably a derivative of phthalic acid. The aromatic acid may contain a single aliphatic substituent which may be bonded directly to the aromatic ring or may be linked through any hetero linking group such as -O-, -S-, -CO- or particularly -COO-. The aliphatic substituent can be any group, or mixture of groups, as specified for the group R in the acid of the general formula (I). It is especially preferred that the aliphatic group is linked to the aromatic ring through a -COO- group.

Diacids of general formula (I) and their anhydrides, are commercially available. Aromatic diacids having an aliphatic substituent may be obtained by the esterification of a derivative of an aromatic tri-acid or derivative thereof, for example from trimellitic anhydride by esterifying, with a suitable alcohol, the acid chloride of the anhydride. The acid chloride may be prepared, if necessary, by chlorinating the carboxylic acid group of the anhydride using a suitable chlorinating agent such as thionyl chloride.

Diacids which may be used in the composition of the present invention include succinic acid and succinic acid anhydride derivatives having a mixture of alkenyl groups containing predominantly 12 to 14 carbon atoms attached to the diacid. Useful effects have also been obtained where the alkenyl group attached to the succinic acid or succinic acid anhydride is a polymeric alkenyl group such as a polyisobutenyl group, especially where the polyisobutenyl succinic acid or succinic acid anhydride has a molecular weight of less than 2000, and at least 700.

Derivatives of phthalic acid and phthalic acid anhydride which have been found especially suitable are those containing an aliphatic ester group wherein the aliphatic group is linked to the aromatic ring by a -COO- group in the 4-position relative to one of the carbonyl groups. By way of specific examples there may be mention propyloxycarbonyl allyloxycarbonyl, hexenyloxycarbonyl, hexyloxycarbonyl and a mixed alkyloxycarbonyl group containing linear and branched chains having between 13 and 15 carbon atoms.

It is preferred that the aliphatic chain in the diacid contains at least one unsaturated bond between the aliphatic carbon atoms.

A wide range of particulate inorganic solids may be used depending on the intended use of the composition and, if desired, a mixture of particulate inorganic solids may be used. The particulate inorganic solid is suitably a basic filler for example an oxide, a hydrated oxide, a hydroxide, a carbonate or a mixture thereof, and especially is predominantly an oxide, a hydrated oxide, a hydroxide or carbonate of a metal of group II or III, such as magnesium, calcium or aluminium or a mixture thereof. The particulate inorganic solid is typically a material of the type which is used as an intumescent filler for a plastic material. The inorganic solid may be magnesium hydroxide, hydrated alumina, aluminium hydroxide, a hydroxycarbonate such as hydrated magnesium hydroxy carbonate which occurs naturally as hydromagnesite, a mixed carbonate such as magnesium-calcium carbonate or may be a mixture of two or more such materials, for example a naturally occurring mixture of huntite and hydromagnesite which is available from Microfine Minerals Limited as "Ultracarb".

As a preferred composition in accordance with the present invention, the particulate inorganic solid is one or more halogen-free compounds which provide fire retardant and/or smoke suppressant characteristics to a polymer composition. In the preferred composition the particulate inorganic solid is both a fire retardant component and a smoke suppressant component. It is particularly preferred that the particulate inorganic solids are halogen-free, or contain only a small proportion, such as less than 10% by weight of the total composition, of halogen-containing compounds. The fire retardant component is preferably a compound which liberates water on heating, for example the material referred to as hydrated alumina which may also be regarded as a form of aluminium hydroxide or a compound which liberates water at a temperature of at least 260°C, for example magnesium hydroxide (alternatively referred to as hydrated magnesia). The fire retardant component may be used in an admixture with other materials, for example precipitated calcium carbonate. The proportion of the fire retardant component is preferably in the range from 70 up to 100% by weight of the total particulate inorganic solid and the proportion of any other component is preferably in the range from 0 up to 30% by weight of the total particulate inorganic solid.

The preferred compositions in accordance with the present invention are those in which the particulate inorganic solid is a fire retardant material which liberates water on heating and the diacid is a compound of general formula (I), in which n has a value of zero and R is an alkenyl group, particularly a mixture of diacids containing alkenyl groups predominantly containing 12 to 14 carbon atoms, or containing a polyisobutenyl group having an average molecular weight of at least 700. Especially useful effects have

been obtained where the polyisobutenyl group has an average molecular weight of at least 1000.

In addition to the particulate inorganic solid and the diacid, the composition of the present invention may include further components, in particular materials which are effective as processing aids. Such materials include the esters of polyols, particularly partially esterified polyols obtained by the esterification of a polyol with an acid especially an aliphatic acid containing at least eight, more preferably at least ten, carbon atoms such as octanoic, decanoic, dodecanoic, tetradecanoic and octadecanoic acid. The polyol can be an aliphatic compound containing at least two OH groups, for example glycerol, trimethylolpropane and pentaerythritol or may be sorbitan. All of the OH groups may be esterified but we prefer to use compounds in which at least one OH group is not esterified, for example a material which is a mixture of predominantly glycerol monoester, particularly with a commercially available long chain fatty acid mixture comprising mainly $C_{16}$ to $C_{18}$ acids.

It should be appreciated that some of the materials which can be used to obtain the compositions of the present invention may be obtained as mixtures and such mixtures are referred to herein by reference to the predominant component, or components, of the mixture.

As is discussed in more detail hereafter, the compositions of the present invention may be incorporated into a polymeric material. The compositions which are incorporated into a polymeric material may be obtained by mixing the particulate inorganic solid and the diacid with the polymeric material using any known blending technique, for example using a solids blending technique such as a tumble blender or a high speed mixer, or using a melt mixing technique such as a two roll mill, an internal mixer such as a Banbury or Brabender mixer or by using a compounding extruder. The particulate inorganic solid and the diacid may be added to the polymeric material in any order. Thus, the particulate inorganic solid may be added to the polymeric material and the diacid added subsequently or the reverse procedure may be used.

It is preferred that the composition comprising the particulate inorganic solid and the diacid is pre-formed prior to being incorporated into a polymeric material. It is especially preferred that the diacid is coated onto the particulate inorganic solid.

The composition may be prepared using any suitable technique and is preferably prepared using conditions under which the diacid is, at least partially, coated onto the surface of the particulate inorganic solid. The blending technique used is dependent on the particular diacid and especially the physical form thereof, which may be a solid or may be a liquid which may have a high viscosity.

Solid diacids may be mixed with the particulate inorganic solid using a suitable solids blending technique, conveniently using a high speed mixer, which may be heated. Alternatively, the diacid in liquid form, or in solution, emulsion or dispersion is added to the solid, preferably by adding the liquid to the stirred solid. If the diacid is a viscous liquid, this may be diluted with a compatible liquid medium which is not reactive with the diacid or may be heated to a temperature at which the viscosity is sufficiently lowered for the liquid to be readily handled. If the diacid is added as a solution or as a diluted mixture with another liquid, the liquid is preferably one which is more volatile than the diacid and especially has a boiling point of not more than 100°C. Materials which may be used as a solvent or a compatible liquid medium include alkanols and polyols, especially those containing not more than four carbon atoms, for example ethanol, or a halogenated hydrocarbon liquid such as 1,1,1-trichloroethane. Any solvent or compatible liquid medium which is used in the addition of the diacid to the particulate inorganic solid is preferably removed from the composition produced, either by allowing the solvent or compatible liquid to evaporate, if sufficiently volatile, or by raising the temperature in the later stages of the mixing process to evaporate off the solvent or compatible liquid. A similar procedure may be used if the diacid is added as an emulsion or dispersion in a non-solvent liquid, for example as an aqueous emulsion or dispersion.

If the diacid is a solid having a relatively low melting point, for example not more than 150°C the diacid and the particulate inorganic solid are initially mixed with both components in the solid state and mixing is continued while the temperature is raised to a temperature above the melting point of the diacid to promote at least a partial coating of the diacid onto the particulate inorganic solid.

The proportion of the diacid may be as much as 20% by weight of the particulate inorganic solid but in general lower proportions are sufficient. However, proportions of up to 20% by weight of the diacid may be present in a concentrated mixture which may be diluted for use by mixing with an appropriate quantity of the particulate inorganic solid which does not contain any of the diacid. The composition preferably contains at least 0.2%, and especially at least 0.5%, by weight, relative to the particulate inorganic solid, of the diacid. Preferred compositions contain not more than 10%, and especially not more than 5%, by weight of the diacid.

If the composition also includes a material which is effective as a processing aid, the proportion of this further material is typically in the range as disclosed herein for the diacid. The weight ratio of the diacid to the processing aid is conveniently in the range 20:1 to 1:10, especially 15:1 to 1:1 for example 10:1.

The composition of the present invention may be incorporated into a polymeric material, for example an olefin polymer or a polyamide. Preferred compositions may be incorporated into the polymer in an amount such that the polymer composition contains a high proportion of the particulate inorganic solid, for example at least 30% by weight, preferably at least 50% by weight, and especially about 70% or more by weight of the particulate inorganic solid. The polymer composition typically contains not more than 90%, particularly not more than 80%, by weight of the particulate inorganic solid.

The polymeric material is very conveniently an olefin polymer. The olefin polymer, which term is used herein to include both homopolymers and copolymers containing at least 50% by weight of one, or more, olefin monomers, is a polymer of an olefin monomer which typically contains not more than ten carbon atoms. Thus, the olefin polymer may be any ethylene homopolymer or copolymer, particularly high density polyethylene or linear low density polyethylene which is a copolymer of ethylene with a higher olefin monomer such as butene-1, hexene-1, octene-1 or 4-methylpentene-1. Other ethylene polymers are the copolymers of ethylene and a polymer monomer, for example an ethylene-vinyl acetate copolymer typically one containing 10 to 40% by weight of vinyl acetate. Alternatively, the olefin polymer may be a propylene homopolymer or copolymer, for example a random copolymer of propylene with up to 8% by weight, relative to the polymer, of ethylene, or a sequential polymer obtained by polymerising propylene in the essential absence of other monomers and thereafter copolymerising a mixture of ethylene and propylene to give a polymer containing from 5 up to 30% by weight of ethylene. It is particularly preferred that the olefin polymer is a propylene polymer.

The preferred polymer is one having a molecular weight which is appropriate for a material which can be used for the production of shaped articles by an injection moulding or extrusion process. Thus, suitable olefin polymers, especially ethylene or propylene, are those having a melt flow index, measured according to ASTM Test Method 1238-79 using a 2.16 kg weight at a temperature of 230°C, which is in the range from 0.5 up to 50, for example from 1.0 up to 30.

The incorporation of a high proportion of the particulate inorganic solid into the polymeric material will reduce the melt flow index and the polymer composition containing the particulate inorganic solid typically has a melt flow index, measured at 190°C but otherwise under the conditions specified previously herein, of not more than 10 and typically at least 0.05. In general the polymer composition has a melt flow index of not more than 8.

A preferred polymer composition in accordance with the present invention comprises a propylene polymer, aluminium hydroxide or magnesium hydroxide and an acid or anhydride compound or mixture.

The preferred polymer composition is especially one containing at least 50%, and not more than 80%, by weight of the polymer composition of aluminium hydroxide or magnesium hydroxide and 0.5 up to 5% by weight, relative to the aluminium hydroxide or magnesium hydroxide, of diacid of formula (I), wherein n has a value of zero and R is an alkenyl group, and particularly a mixture of diacids of formula (I) in which the alkenyl groups predominantly contain 12 to 14 carbon atoms.

The preferred polymer composition has fire retardant properties and can be used in applications for which a material having fire retardant properties is desirable. Since, the polymer composition does not contain a halogen-containing monomer, it typically will evolve fumes of lower toxicity than are obtained from polymer compositions containing a halogen-containing monomer, for example a polyvinylchloride based material.

In addition to the polymer, particulate inorganic solid and diacid, the polymer composition which is a further aspect of the present invention typically includes at least one additive to at least partially inhibit the degradation of the polymer component, particularly the olefin polymer component, of the composition. These additives include, inter alia, antioxidants, light stabilisers and, if necessary, copper or metal deactivators. The proportion of each of such additives is typically less than 2% by weight based on the olefin polymer and in general does not exceed 1% by weight based on the olefin polymer. A wide range of additives which provide some inhibition of the degradation of olefin polymers are known and the skilled worker will be able to select appropriate additives in accordance with the particular olefin polymer and the conditions under which it is to be processed and used. Examples of additives which can be used include
1,1,3-tris(2-methyl-4-hydroxy-5-tertiarybutylphenyl)butane in combination with dilaurylthiodipropionate;
polymerised 1,2-dihydro-2,2,4-trimethylquinoline;
2,6-di-tertiarybutyl-4-methylphenol;
4,4-thio-bis-(6-tertiarybutyl-4-methyl phenol);
oxalic acid bis (benzylidene hydrazide);
N,N'-bis (beta-3, 5-ditertiarybutyl-4-hydroxy phenylpropiono) hydrazide; and
pentaerythrityl tetrakis(beta-3,5-ditertiarybutyl-4 -hydroxyphenylpropionate).

The polymeric compositions in accordance with the present invention may be formed into shaped

articles by any suitable technique, particularly by injection moulding or, especially, by extrusion.

To improve the performance of some polymers, for example polyethylene and copolymers of ethylene and vinyl acetate, it may be desirable to cross-link the olefin polymer once the polymer composition has been formed into a shaped article.

Cross-linking of such olefin polymer components may be achieved using any of the known techniques such as free radical, especially peroxide; radiation; or silane cross-linking.

Preferred polymer compositions in accordance with the present invention may include additional polymeric materials to improve the properties of the composition, for example a rubber which improves the impact properties of the polymer composition. The rubber can be a thermoplastic rubber for example a tri-block copolymer having polystyrene end blocks and a rubbery poly(ethylene-butylene) middle block. If desired the rubber may be blended with an oil, for example an oil having a boiling range of above 200°C which is a mixture of paraffins and naphthenes.

The polymer compositions of the present invention may be obtained by blending the polymer with a pre-formed mixture of the particulate inorganic solid and the diacid and also with any other components of the composition. Alternatively, the particulate inorganic solid and the diacid may be added separately to the polymer together with such other components as are desired. Other sequences of addition may be used, as desired, to obtain the polymer composition. The polymer compositions may be obtained using any suitable blending technique, particularly a melt mixing technique using, for example, a two roll mill or, preferably, an internal mixer such as a Banbury or Brabender mixer. The mixing may be effected using a compounding extruder which may be a single screw extruder or, preferably, a twin screw extruder.

The polymer composition may be formed directly into a shaped article but more conveniently is first formed into granules which are subsequently injection moulded or extruded to form the desired shaped article. The polymer composition can be used for coating electrical conductors or as fire retardant panels or as a floor covering.

Various aspects of the present invention are described hereafter in the following illustrative examples in which all proportions are by weight unless specified to the contrary.

**Examples 1 to 11**

A. **Polymer Premix**

A thermoplastic rubber (a tri-block copolymer having polystyrene end blocks and a rubbery (ethylene-butylene) middle block available from Shell Chemicals as Kraton G 1652, 40 parts) was mixed in a beaker with a hydrocarbon oil (a mixture of paraffins and napathenes available as Plastic Oil 260 from Witco BV, 40 parts) and pentaerythrityl tetrakis (beta-3,5-ditertiarybutyl-4-hydroxyphenylpropionate) (an antioxidant available from Ciba-Giegy as Irganox 1010, 4 parts). The mixture was allowed to stand overnight to allow the oil to soak into the rubber. The mixture was then melt-processed using a Farrell-Bridge 2-roll mill with the rollers heated by oil circulation at 200°C (front) and 140°C (rear). When the mixture was molten on the rollers, polypropylene (grade Moplen Z30S ex Himont, 400 parts) was added in portions to melt and form a viscous, molten band around the rollers. This band was scraped off the rollers, folded and put back between the nip of the rollers to form a fresh band. This operation was repeated 6 times over a period of 15-25 minutes to thoroughly mix the components and the material was then scraped off the rollers, cut into pieces and, when cold, was granulated using a simple mechanical granulator. The product (450 parts) was finally mixed by hand, tumble-blending in a plastic bag to give a uniform mix.

B **Powder Mix**

Alumina trihydrate (ATH, Grade SF-7 ex BA Chemicals PLC, 19.30 parts), polymer premix obtained described in Section A, 8.00 parts) and a diacid (0.28 parts), as listed in Table One were weighed into the grinding bowl of a coffee mill and mixed thoroughly for one minute, to give a physical distribution of the components.

The composition of the mixture formed was:

| | |
|---|---|
| Alumina trihydrate | 70.0% by weight |
| Polypropylene | 24.0% by weight |
| Rubber | 2.4% by weight |
| Plastic Oil | 2.4% by weight |
| Diacid | 1.0% by weight |
| Antioxidant | 0.2% by weight. |

The mixture was emptied from the coffee-mill ready for transfer to the next stage.

C. **Brabender Mixing**

A Brabender Plastograph Type PL3S (ex Brabender Duisberg, W.Germany) was set up for use fitted with a roller mixing head type W30H, and with a circulation of heat transfer oil to the jackets on the head. The temperature of the oil reservoir was set at 210°C.

The speed of rotation of the mixer was adjusted to 20rpm. A Brabender "quick-charge chute" was fitted and the powder mix obtained as described in section B was transferred into the chute and, using the ram and a 5Kg weight, the powder mix was pushed into the mixing head of the Brabender. The torque on the Brabender motor was recorded continuously giving a measure of the viscosity of the contents of the mixing chamber, whilst the temperature of the melt was measured by a fixed thermocouple and recorded at intervals. The recorded torque on the motor increased rapidly as the dry powders were added, and then fell as the polymers melted and a "putty" was formed. In a typical experiment, the torque was recorded at 20rpm shear rate for 20 minutes, then the shear rate was increased to 40 rpm and the torque allowed to stabilise. Further stepwise increases to 120 rpm were carried out, and finally the shear rate was returned to 20 rpm. The melt temperature was recorded at intervals.

Finally the contents of the mixing head, a thick putty-like material, were scraped out whilst still hot.

The results obtained are set out in Table One in which the torque after mixing for 3 minutes and 20 minutes is recorded.

D **Product Evaluation**

The hard rock-like lumps obtained from the Brabender were broken up between sheets of paper using a hammer, then ground to a sandy material in a coffee-mill. The melt flow index of each product was measured using a Davenport instrument according to the methods described in ASTM Standard 1238-79 at a standard temperature of 190°C and using a standard 2.16Kg weight or using a standard 5Kg weight. Results are set out in Table One.

**TABLE ONE**

| Ex or Comp Ex | Diacid (a) | Torque (m.g.) (b) 3 min | 20 min | MFI (c) parts in 10 min 2.16Kg | 5.0Kg |
|---|---|---|---|---|---|
| A | NIL | 4400 | 3500 | 0 | 0 |
| B | SiATH | 1100 | 800 | 2.2 | ND |
| C | SA | 1800 | 2500 | 0 | 0 |
| D | ODAA | 4900 | 3800 | 0 | 0 |
| 1 | ASAA | 1100 | 850 | 4.9 | ND |
| 2 | ASA | 550 | 450 | 6.8 | ND |
| E | SAA | 5000 | 3400 | ND | ND |
| 3 | MSAA | 1550 | 2100 | ND | ND |
| 4 | PIBSA-1 | 700 | 630 | 1.8 | 1.6 |
| 5 | PIBSA-2 | 1700 | 1150 | 0 | 0.5 |
| 6 | PIBSA-3 | 3000 | 1600 | 0 | 0 |
| F | OA | 1600 | 4800 | 0 | 0 |
| G | PAA | 3500 | 2100 | 0 | 0 |
| H | 4-BPA | 3000 | 1400 | 0 | 0.8 |
| I | 4-NPAA | 3800 | 2600 | 0 | 0 |
| 7 | HECPAA | 1400 | 700 | 2.1 | ND |
| 8 | HCPAA | 2000 | 950 | 0 | 0.8 |
| 9 | MAETMAA | 1500 | 900 | 0 | 0 |
| 10 | ACPAA | 1550 | 750 | 0 | 4.0 |
| 11 | PCPAA | 1800 | 750 | 0 | 0.1 |
| 17* | ASAA | 1300 | 850 | 2.8 | ND |

**Notes to Table One**

(a) Diacid or comparative surfactant

SiATH is a silane coated aluminium trihydrate available from BA Chemicals PLC as grade SF7-S21.

SA is commercial grade stearic acid.

ODAA is octadecanoic acid amide

ASAA is an alkenyl succinic acid anhydride in which alkenyl is a mixture of alkenyl groups predominantly containing 12 or 14 carbon atoms (commercially available as Synperax 3 from ICI)

ASA is an alkenyl succinic acid in which the alkenyl is a mixture of alkenyl groups predominantly containing 12 or 14 carbon atoms (commercially available as Synperax 4 from ICI)

SAA is succinic acid anhydride (commercially available from Aldrich Chemical Co).

MSAA is methyl succinic acid anhydride (available from Aldrich Chemical Co).

PIBSA-1 is a polyisobutenyl succinic acid anhydride having an average molecular weight of about 1120 and available as PIBSA 112 from Exxon Chemicals.

PIBSA-2 is a polyisobutenyl succinic acid anhydride obtained from Exxon Chemicals as EC14665, and derived from a poly(isobutene) of average molecular weight about 700

PIBSA-3 is a polyisobutenyl succinic acid anhydride obtained from Exxon Chemicals as SN11636, and derived from a poly(isobutene) of average molecular weight about 2250.

OA is commercial grade oleic acid

PAA is commercial grade phthalic acid anhydride

4-BPA is 4-bromophthalic acid, prepared as described in J Prakt Chem. 126 (1930) 66

4-NPAA is 4-nitrophthalic acid anhydride, obtained from Aldrich Chemical Company

HECPAA is 4-(Hex-5-enyloxycarbonyl)phthalic acid anhydride, which preparation is described in Example 12

HCPAA is 4-(Hexyloxycarbonyl)phthalic acid anhydride, which preparation is described in Example 13

MAETMAA is a mixed alkyl ester of trimellitic acid anhydride, which preparation is described in Example 14

ACPAA is 4-(allyloxycarbonyl)phthalic acid anhydride, which preparation is described in Example 15

PCPAA is 4-(propyloxycarbonyl)phthalic acid anhydride, which preparation is described in Example 16

* See Example 17 for details of composition.

b) Torque is in metre.grammes as recorded by the Brabender Plastograph.

c) MFI is melt flow index determined in accordance with ASTM Test Method 1238-79 at a temperature of 190°C using a 2.16Kg or a 5.0Kg weight.

ND means not determined.

**Example 12**

Preparation of 4-(Hex-5-enyloxycarbonyl)phthalic anhydride.

Trimellitic anhydride acid chloride (ex Aldrich Chemical Co.; 21.0 parts) was stirred with toluene (200 $cm^3$) at room temperature forming a colourless solution which was very slightly cloudy. This was cooled to 5°C by use of an ice/water bath. Separately a solution was prepared of 5-hexen-1-ol (ex Aldrich Chemical Co.; 10.0 parts) and pyridine (7.9 parts) in toluene (30 $cm^3$). This latter solution was added slowly to the stirred acid chloride solution whilst maintaining the flask temperature at 5-10°C by use of an ice/water bath. The alcohol/pyridine solution was washed in with a small volume of toluene. The mixture was stirred between 5 and 10°C for a further 30 minutes then the precipitate (of pyridine hydrochloride) was filtered off and washed with toluene. The combined toluene filtrates were transferred to a separating funnel and shaken with a solution of sodium hydrogen carbonate (100 $cm^3$ of 2% w/v aqueous solution). After settling, the aqueous layer was separated and discarded. The toluene solution was then washed by shaking with water (100 $cm^3$), allowed to settle and then separated. The water wash was repeated. The toluene solution was then treated with anhydrous magnesium sulphate (10 parts), allowed to stand for 30 minutes and filtered through a fluted filter paper. The clear toluene filtrate was transferred to a rotary evaporator flask and the toluene removed by distillation at reduced pressure. The product was obtained as a clear liquid which set to a white solid (24.0 parts) on cooling.

The infra-red spectrum of the product was recorded in molten state between sodium chloride plates, using a Perkin Elmer 883 spectrophotometer. The principal absorbances and assignments made are listed below:-

| | |
|---|---|
| 3080 $cm^{-1}$ | =CH-H stretch, alkene |
| 3000-2800 $cm^{-1}$ | C-H stretch, alkane |
| 1855 $cm^{-1}$ ) | C=O stretch, anhydride |
| 1784 $cm^{-1}$ ) | C=O stretch, anhydride |
| 1728 $cm^{-1}$ | C=O stretch, ester |
| 1641 $cm^{-1}$ | C=C stretch, alkene |
| 913, 895, 721 $cm^{-1}$ | C-H stretch, benzene ring |

There was no absorbance in the region 3400-3200 $cm^{-1}$ (O-H stretch in alcohol) showing complete conversion of the alcohol starting material.

The proton magnetic resonance spectrum was obtained as a solution in deutero-chloroform, using tetramethylsilane as reference. The spectrum was obtained using a JEOL PMX 60SI spectrometer with standard instrument settings. Peaks were detected, integrals obtained, and assignments made as follows:-

9.8-8.1 ppm; complex multiplet; 3 protons; aromatic

6.1-5.6 ppm; multiplet; 1 proton; $-\underline{CH}=CH_2$

5.2-4.9 ppm; multiplet; 2 protons; $-CH=\underline{CH_2}$

4.5 ppm; multiplet; 2 protons; $-\underline{CH_2}OCO$
2.5-1.5 ppm; complex multiplet; 6 protons; aliphatic $-CH_2-$

The observed spectra were thus consistent with the expected structure. The product was evaluated as a dispersant for alumina trihydrate in a polypropylene/rubber matrix and the results summarised in Table One.

**Example 13**

Preparation of 4-(Hexyloxycarbonyl)phthalic anhydride.

This was prepared by the method described in Example 12, except that n-hexanol (11.2 parts) was used instead of 5-hexen-1-ol. The product obtained (10.5 parts) was examined by infra red and nuclear magnetic resonance spectroscopies as described in Example 12, and the spectra obtained were consistent with the required structure. The product was evaluated as a dispersant for alumina trihydrate in a polypropylene/rubber matrix and the results summarised in Table One.

**Example 14**

Preparation of a mixed alkyl ester of trimellitic anhydride.

This was prepared by the method described in Example 12 except that the 5-hexen-1-ol was replaced with SYNPROL 135 (21.0 parts, a mixed alkanol containing chains of mostly 13 and 15 carbons and including some branched chains, obtained from ICI Chemicals and Polymers). The method was as described in Example 10 except that the wash with a solution of sodium hydrogen carbonate was omitted. The product was obtained as a clear, colourless liquid which set to a white solid (33.4 parts) on cooling to room temperature. The infra red spectrum, obtained as described in Example 12 contained the absorbances consistent with the required structure, and the absorbance due to O-H stretch in the alcohol was absent, as shown below:-

| | |
|---|---|
| 3400-3200 $cm^{-1}$<br>3000-2800 $cm^{-1}$<br>1855 and 1785 $cm^{-1}$<br>1725 $cm^{-1}$<br>920, 890, 720 $cm^{-1}$ | O-H stretch alcohol; absent<br>C-H stretch; alkane<br>C=O stretch, anhydride<br>C=O stretch, ester<br>C-H stretch, benzene ring |

The product was evaluated as a dispersant for alumina trihydrate in a polypropylene/rubber matrix and the results obtained summarised in Table One.

**Example 15**

Preparation of 4-(Allyloxycarbonyl)phthalic anhydride.

This was prepared by the method described in Example 12, except that the 5-hexen-1-ol was replaced by allyl alcohol (5.8 parts). The product was obtained as an almost colourless oil which set to a white solid (16.9 parts) on cooling. The infra red spectrum was obtained as described in Example 10 as a thin film of the still molten material. The following absorbances were obtained:-

| | |
|---|---|
| 3400-3200 $cm^{-1}$<br>3106 and 3071 $cm^{-1}$<br>1854 and 1777 $cm^{-1}$<br>1723 $cm^{-1}$<br>1648 $cm^{-1}$<br>919, 886, 722 $cm^{-1}$ | O-H stretch alcohol, absent<br>C-H stretch alkene and alkane<br>C=O stretch, anhydride<br>C=O stretch, ester<br>C=C stretch, alkene<br>C-H stretch, benzene ring |

The proton magnetic resonance spectrum, was obtained as described in Example 10 and contained the following peaks:-

8.8-8.5 ppm doublet; 2 protons ) aromatic
8.3-8.1 ppm doublet; 1 proton ) aromatic
6.5-6.0 ppm multiplet; 1 proton $\underline{CH}=CH_2$
5.8-5.3 ppm multiplet; 2 protons $CH=\underline{CH_2}$

5.1-4.9 ppm doublet; 2 protons $CH_2$-OC

The recorded spectra were thus consistent with the required structure.

The product was evaluated as a dispersant for alumina trihydrate in a polypropyle rubber matrix and the results are summarised in Table One.

**Example 16**

Preparation of 4-(Propyloxycarbonyl)phthalic anhydride.

This was prepared by an analogous method to that described in Example 12 using trimellitic anhydride acid chloride (11.8 parts) and propan-1-ol (3.4 parts) in the presence of pyridine (4.4 parts). The product was obtained as a viscous colourless oil which slowly set to a white solid (9.9 parts) on cooling. An infra red spectrum, obtained as described in Example 10 showed the absorbances listed below:-

| | |
|---|---|
| 3400-3200 $cm^{-1}$ | O-H stretch, alcohol, absent |
| 3000-2800 $cm^{-1}$ | C-H stretch, alkyl |
| 1854$cm^{-1}$ ) | C=O stretch, anhydride |
| 1781 $cm^{-1}$ ) | C=O stretch, anhydride |
| 1726 $cm^{-1}$ | C=O stretch, ester |
| 909 (broad) and 720 $cm^{-1}$ | C-H stretch, benzene ring |

The product was evaluated as a dispersant for alumina trihydrate in a polypropylene/rubber matrix and the results summarised in Table One.

**Example 17**

The alkenyl succinic acid anhydride, used in Example 1, was also evaluated in the following manner.

Alumina trihydrate SF7 grade (ex BA Chemicals, 19.3 parts) was weighed into the mixing bowl of a coffee mill. Polypropylene (Z30S grade ex Himont, 6.61 parts), Kraton G1652 rubber (ex Shell, 0.66 parts) and Irganox 1010 antioxidant (ex Ciba-Geigy, 0.07 parts) were added, followed by a solution of alkenyl succinic acid anhydride (0.28 parts) in Plastic Oil 260 (ex Witco, 0.66 parts). The mixture was blended for 1 minute, then was added to the Brabender Plastograph as described as in Example 1C. The product was evaluated as in Example 1D and the results obtained are summarised in Table One.

**Examples 18 and 19**

A1 **Preparation of pre-mix with Aluminium Hydroxide without Heating**

Alumina trihydrate (1250 parts of ATH SF7 grade) was charged to a Henschel mixture and the stirrer was started at 1300 r.p.m. Alkenyl succinic acid anhydride (ASAA - as defined 19.1 parts) was added over a period of 15 minutes without heating, the temperature rising from 20 to 30°C during the addition period. Stirring was continued for a further 30 minutes during which time the temperature was maintained at not more than 30°C. The stirrer was stopped and the powder was discharged.

A2 **Preparation of pre-mix with Aluminium Hydroxide with Heating**

Alumina trihydrate (1250 parts of ATH SF7 grade) was stirred in a Henschel mixer and alkenyl succinic acid anhydride (ASAA - as defined, 19.1 parts) was added over 15 mins at 19 to 22°C. The mixture was stirred for 15 minutes whilst steam was applied to the jacket of the mixer to raise the temperature to 130°C. Stirring at 130-132°C was continued over a period of 30 minutes. Stirring was continued whilst passing water at ambient temperature through the jacket and the mixture was then discharged when cooled to 25°C.

B **Evaluation of ATH Premixes**

A sample of the ATH premix (19.58 parts) obtained as described in Section A1 or Section A2, was weighed into a coffee mill with polypropylene (Himont grade 230S, 6.62 parts) and a pre-formed mixture of Kraton G1651 (0.66 parts), Witco Plastic oil 260 (0.66 parts) and Irganox 1010 (0.016 parts). The mixture was blended in the coffee mill, charged to the Brabender and blended as described in Examples 1 to 12, Section C.

The resulting mixture had the composition:-

| | |
|---|---|
| Alumina trihydrate | 70.0% |
| Polypropylene | 24.0% |
| Kraton G1651* | 2.4% |
| Plasticising Oil | 2.4% |
| ASAA | 1.1% |
| Antioxidant | 0.06% |

* Kraton G1651 is a thermoplastic rubber of the same general type as the Kraton G1652 which is used in Examples 1 to 3.

The results obtained are set out in Table Two.

C **Rubber Premix**

A rubber/oil/antioxidant premix was prepared by mixing in portions in a Henschel mixer, at ambient temperature for ten minutes. This premix had the composition

| | | |
|---|---|---|
| Kraton G1651 (Shell) | 4243 parts | 66.01% |
| Plastic Oil 260 (Witco) | 2131 parts | 33.15% |
| Irganox 1010 (Ciba-Geigy) | 53.6 parts | 0.84% |

These materials were allowed to stand for a few days to allow the oil to soak into the rubber.

D **Blend for Extrusion**

A blend of ingredients was made by tumble-blending components and premixtures in the following proportions.

| | |
|---|---|
| Pre-mix of section A1 or A2 | 2300 parts |
| Rubber pre-mix of section C | 235 parts |
| Polypropylene (HIMONT Z30S) | 703 parts |

The resulting blend had the following composition:-

| | |
|---|---|
| Alumina trihydrate | 69.97% |
| Polypropylene | 21.71% |
| Kraton G1651 | 4.79% |
| Witco Oil | 2.41% |
| ASAA | 1.06% |
| Antioxidant | 0.06% |

E **Extrusion**

An APV 2030 twin-screw extruder (APV Chemical Machinery Co., Ltd., Cooper St., Hanley, Stoke-on-Trent) was used with the heating zones of the extruder maintained at the following temperatures.

| | | |
|---|---|---|
| Heater Zone | B1 | 175°C |
| | B2 | 180°C |
| | B3 | 185°C |
| | B4 | 185°C |
| | B5 | 165°C |
| Die Heater | D1 | 185°C |

The dry powder mix obtained as described in Section D was fed continuously via a hopper feeder, to "Starve-feed" the extruder, and the molten compound was extruded from the die as a lace which was cooled in a water trough and chopped in a granulator.

The die used had 4 holes each of 5mm diameter. The torque and die pressure were recorded. The general ease of processing is summarised in Table Two.

The melt flow index of each of the products obtained was determined and is also set out in Table Two.

**TABLE TWO**

| Ex or Comp Ex | Diacid (a) | Pre-mix with ATH: Type (d) | Pre-mix with ATH: Brabender Torque(m.g) (b) 3 min | Pre-mix with ATH: Brabender Torque(m.g) (b) 20 min | Twin-Screw Extrusion: General Ease (e) | Twin-Screw Extrusion: Torque (%) | Twin-Screw Extrusion: Die Pressure (Bar) | Product Weight Kg | Product MFI (c) |
|---|---|---|---|---|---|---|---|---|---|
| 18 | ASAA | A1 | 600 | 490 | Very good | 22 | 30 | 1.68 | 0.9 |
| 19 | ASAA | A2 | 680 | 520 | Very good | 25 | 10 | 1.31 | 1.7 |
| J | SiATH | - | 820 | 610 | Quite good. Odour | ND | ND | 0.58 | 1.1 |
| | | | | | +0.15% Ca St: Good | 45-50 | 10 | 0.54 | 0.4 |
| K | NIL | - | 3200 | 3300 | 0.15% Ca St: Very poor. Die press v.high | 40+ | rising to 150 stopped | 0.2 | 0.0 |

**Notes to Table Two**

(a), (b) and (c) are all as defined in Notes to Table One.

(d) A1 is ATH pre-mix prepared without heating.

A2 is ATH pre-mix prepared with heating.

(e) These comments indicate the general ease of processing using the extruder.

+0.15% CaSt indicates that a calcium carboxylate (carboxylate group derived from a commercially available long chain fatty acid mixture comprising mainly $C_{16}$ to $C_{18}$ acids) was additionally added to the mix in an amount of 0.15%wt relative to the total mixture.

**Example 20**

A **Preparation of pre-mix with Aluminium Hydroxide with Heating**

Alumina trihydrate (1250 parts of ATH SF7 grade) was stirred in a Henschel mixer and warmed to 50-60°C. Alkenyl succinic acid (ASA - as defined, 19.1 parts) was added over 15 mins at 50 to 60°C. The mixture was stirred for 15 minutes whilst steam was applied to the jacket of the mixer to raise the temperature to 130°C. Stirring at 130-132°C was continued over a period of 30 minutes. Stirring was continued whilst passing water at ambient temperature through the jacket and the mixture was then discharged when cooled to 25°C.

B **Evaluation of ATH Premixes**

A sample of the ATH premix (19.58 parts) obtained as described in Section A1 or Section A2, was weighed into a coffee mill with a preformed mixture of polypropylene (Himont grade Moplen Z30S), Kraton G1651, Witco Plastic Oil 260 and Irganox 1010 (8.0 parts). The mixture was blended in the coffee mill, charged to the Brabender and blended as described in Examples 1 to 11, Section C.

The resulting mixture had the composition:-

| | |
|---|---|
| Alumina trihydrate | 70.0% |
| Polypropylene | 24.0% |
| Kraton G1651 | 2.4% |
| Plasticising Oil | 2.4% |
| ASA | 1.1% |
| Antioxidant | 0.06% |

The results obtained are set out in Table Three.

C **Rubber Premix**

A rubber/oil/antioxidant premix was prepared as described in Section C of Examples 18 and 19.

D **Blend for Extrusion**

A blend of ingredients was made by tumble-blending components and premixtures in the following proportions.

| | |
|---|---|
| Pre-mix of section A | 2300 parts |
| Rubber pre-mix of section C | 222 parts |
| Polypropylene (HIMONT Z30S) | 665 parts |

The resulting blend had the following composition:-

| | |
|---|---|
| Alumina trihydrate | 71.08% |
| Polypropylene | 20.87% |
| Kraton G1651 | 4.60% |
| Witco Oil | 2.31% |
| ASA | 1.08% |
| Antioxidant | 0.06% |

E **Extrusion**

An APV 2030 twin-screw extruder was used with the heating zones of the extruder maintained at the following temperatures.

| | | |
|---|---|---|
| Heater Zone | B1 | 175°C |
| | B2 | 180°C |
| | B3 | 185°C |
| | B4 | 185°C |
| | B5 | 180°C |
| Die Heater | D1 | 185°C |

The dry powder mix obtained as described in Section D was fed continuously via a hopper feeder, to "Starve-feed" the extruder, and the molten compound was extruded from the die as a lace which was cooled in a water trough and chopped in a granulator.

The die used had 4 holes each of 3.5mm diameter. The torque and die pressure were recorded.

The general ease of processing is summarised in Table Three.

**Example 21**

The procedure of Example 20 was repeated with the exception that alkenyl succinic acid anhydride (ASAA, 38.7 parts) was added to the Henschel mixer, instead of alkenyl succinic acid. In section D, the weight of each ingredient was as specified in Example 20, and the resultant blend had the following composition:

| | |
|---|---|
| Alumina trihydrate | 70.00% |
| Polypropylene | 20.86% |
| Kraton G1651 | 4.60% |
| Witco Oil | 2.31% |
| ASAA | 2.17% |
| Irganox 1010 | 0.06% |

**Example 22**

The procedure of Example 20 was repeated with the exception that alkenyl succinic acid anhydride (ASAA, 19.1 parts) was added to the Henschel mixer, instead of alkenyl succinic acid. In section D, the weight of each ingredient was as specified in Example 20 and, in addition, 3.2 parts of a mixture of glycerol esters (predominantly monoesters) with a commercially available long chain fatty acid mixture comprising mainly $C_{16}$ to $C_{18}$ acids (hereafter referred to as "glycerol monostearate") was added. The resultant blend had the following composition:

| | |
|---|---|
| Alumina trihydrate | 71.01% |
| Polypropylene | 20.85% |
| Kraton G1651 | 4.60% |
| Witco Oil | 2.30% |
| ASAA | 1.08% |
| Glycerol monostearate | 0.10% |
| Irganox 1010 | 0.06% |

**Examples 23 and 24**

The procedure of Example 20 was repeated with the exception that alkenyl succinic acid anhydride (12.7 parts) was added to the Henschel Mixer, instead of alkenyl succinic acid. In section D, the weight of each ingredient was as described under Example 18, and the resultant blend had the following composition (Example 23).

| | |
|---|---|
| Alumina trihydrate | 71.44% |
| Polypropylene | 20.87% |
| Kraton G1651 | 4.60% |
| Witco Oil | 2.30% |
| ASAA | 0.72% |
| Irganox 1010 | 0.06% |

Part way through the processing, the remaining powder blend (1500 parts) was mixed with glycerol monostearate (as defined, 1.5 parts) then processing was continued. The resultant blend had the following composition (Example 24).

| | |
|---|---|
| Alumina trihydrate | 71.38% |
| Polypropylene | 20.85% |
| Kraton G1651 | 4.59% |
| Witco Oil | 2.30% |
| ASAA | 0.72% |
| Glycerol monostearate | 0.10% |
| Irganox 1010 | 0.06% |

**TABLE THREE**

| Ex or Comp Ex | Diacid (a)(f) | % Diacid on total mass | Pre-mix with ATH Brabender Torque(m.g) (b) 3 min | 20 min | Twin-Screw Extrusion General Ease (e) | Torque (%) | Die Pressure (Bar) | Product Weight Kg |
|---|---|---|---|---|---|---|---|---|
| 20 | ASA | 1.08 | 700 | 550 | Very good | 25 | 265 | 2.58 |
| 21 | ASAA | 2.17 | 700 | 550 | Very good | 22 | 250 | 2.40 |
| 22 | ASAA | 1.08 | | | | | | |
| | GMS | 0.1 | ND | ND | Very good | 25 | 280 | 1.98 |
| 23 | ASAA | 0.72 | 600 | 500 | Quite good | 25 | 300 | 0.90 |
| 24 | ASAA | 0.72 | | | | | | |
| | GMS | 0.1 | ND | ND | Quite good | 25 | 250 | 0.60 |
| L | SiATH | | | | | | | |
| | GMS | 0.1 | ND | ND | Quite good | 25 | 290 | 1.94 |

**Notes to Table Three**

(a), (b) and (c) are all as defined in Notes to Table One.

(e) is as defined in Notes to Table One.

(f) GMS is glycerol monostearate - as defined in Example 22.

F. **Injection Moulding**

The products obtained from twin-screw extrusion processing were moulded into test plaques using a BOY 30M injection moulder. The heaters were set to as high a temperature as possible to minimise the viscosity of the melt yet not so high as to cause thermal degradation of the alumina trihydrate. The actual temperatures used were 188°C (Nozzle and Zone 4) and 175°C (Zones 2 and 1). Water circulation to the mould was set at 87°C and standard machine settings were used to provide plaques of three types:

1. Tensile bars, dumb-bell shaped strips 114 x 7 mm (at narrow section) x 1.6 mm.
2. "Notched" Izod bars, 63 x 13 x 3.2 mm with a standard notch moulded on one side.
3. Discs, 89 mm diameter x 1.7 mm thickness.

G. **Fire Tests**

"Notched" Izod bars were subjected to a burning test using a gas flame, according to the requirements of the Underwrites Laboratory Specification UL94V-O Vertical Burning Test. Further tests were carried out using strips (12.5 mm x 85 mm approx x 1.7 mm) cut from injection moulded discs. The results are shown in Table Four.

H. **Mechanical Tests**

1. **Tensile Tests**

Tensile bars, as described in Section F above, were subjected to increasing stress in tension, according to the methods of ASTM Specification D638-82 and at a cross head speed of 2 mm/min. The tests were carried out using a Tensometer Micro 350 (Testometric Co. Ltd.) with standard instrument settings and the ultimate tensile strength at break, and elongation at break were recorded. At least 5 replicate tests per type were carried out, and the mean values are displayed in Table Four.

2. **Flexural Tests**

Strips were cut using a die from injection moulded discs, at 25 x 88 x 1.7 mm, and were subjected to flexural test according to the methods described in BS 2782: Part 3: Method 335A (1978). Flexural stress at break, and flexural modulus were measured for at least 5 replicates per type and the mean values are recorded in Table Four. Two types of instrument were used for the measurements, a Tensometer Micro 350 (Tensitometer Co. Ltd.) which was operated with a cross-head speed of 10 mm/min, and a Universal Testing Machine (Instron) operated at a cross head speed of 5 mm/min. Instrument settings were standard.

3. **Impact Tests**

"Notched" Izod bars, as described in Section F above, were subjected to impact by a 0.5 joule pendulum using a Zwick impact tester, at 23°C and according to the methods described in British Standard Specification BS 2782: Part 3: Method 350 (1984). At least 5 replicates per type were tested and the mean values are recorded in Table Four.

**TABLE FOUR**

| EXAMPLE OR COMP EX | Diacid (a) | Diacid (a) % on Total | Premix Type (d) | FIRE TESTS UL94 3.2 mm | FIRE TESTS V-O CLASS 1.7 mm | TENSILE TESTS STRENGTH AT BREAK MPa | TENSILE TESTS ELONGN. % | FLEXURAL TESTS STRENGTH AT BREAK MPa | FLEXURAL TESTS MODULUS GPa | IMPACT STRENGTH $kJm^{-2}$ |
|---|---|---|---|---|---|---|---|---|---|---|
| 18 | ASAA | 1.06 | A1 | PASS | PASS | 17.4 | 9.9 | (In) 27.1 | 2.8 | 5.9 |
| 19 | ASAA | 1.06 | A2 | ND | PASS | 17.4 | 10.4 | (In) 28.4 | 2.9 | 6.5 |
| J | SiATH | - | - | ND | ND | 22.7 | 12.5 | 41.6 | 4.2 | ND |
| K | NONE | | | No data - insufficient product from extrusion-processing very difficult | | | | | | |
| 20 | ASA | 1.0 | A2 | PASS | PASS | 17.2 | 8.8 | 23.0 | 3.0 | 6.6 |
| 21 | ASAA | 2.17 | A2 | PASS | PASS | 16.5 | 10.5 | 21.2 | 2.8 | 7.0 |
| 22 | ASAA | 1.08 | A2 | PASS | PASS | 17.5 | 10.0 | (In) 28.7 | 2.8 | 9.7 |
| | +GMS | 0.10 | | | | | | | | |
| 23 | ASAA | 0.72 | A2 | No data - insufficient product from extrusion | | | | | | |
| 24 | ASAA | 0.72 | A2 | ND | ND | 16.1 | 9.4 | 29.0 | 4.4 | ND |
| | +GMS | 0.10 | | | | | | | | |
| L | SiATH | - | - | Pass | Pass | 25.6 | 13.9 | (In) 36.9 | 3.1 | 5.7 |
| | +GMS | 0.1 | A1 | | | | | | | |
| M | None | - | - | No data - insufficient product from extrusion - processing very difficult | | | | | | |

**Notes to Table Four**

(a) Diacid is as defined in Notes to Table One.

(d) A1 is ATH premix prepared without heating.
A2 is ATH premix prepared with heating.

(In) refers to Flexural test measurements made using the Instron instrument. All other Tensile and Flexural measurements were made using Tensometer Micro 350.

ND means Not Determined.

GMS is Glycerol monostearate, as defined in Example 22.

## Claims

**1.** A composition comprising a particulate inorganic solid and 0.1 up to 20% by weight, relative to the particulate inorganic solid, of a di-carboxylic acid or anhydride thereof having an aliphatic chain containing up to 204 carbon atoms and selected from
a) a diacid or anhydride thereof of the general formula (I)

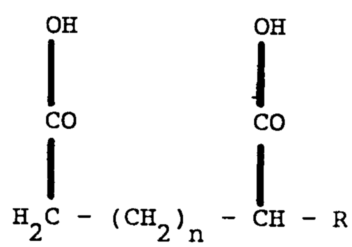

(I)

or
b) a monocyclic aromatic diacid or anhydride thereof having at least one aliphatic substituent;
wherein;
R is a saturated or unsaturated aliphatic group containing up to 200 carbon atoms; and
n is zero, one or two.

**2.** A composition as claimed in claim 1 wherein the dicarboxylic acid or anhydride thereof contains at least eight carbon atoms.

**3.** A composition as claimed in either claim 2 or claim 3 wherein the group R is derived from a polymer of one or more mono olefins.

**4.** A composition as claimed in claim 3 wherein the group R contains, on average, from 40 to 200 carbon atoms.

**5.** A composition as claimed in either claim 3 or claim 4 wherein the group R is derived from an isobutylene polymer.

6. A composition as claimed in any one of claims 1 to 5 wherein the aliphatic chain in the dicarboxylic acid or anhydride thereof contains at least one unsaturated bond between the aliphatic carbon atoms.

7. A composition as claimed in any one of claims 1 to 6 containing a plurality of dicarboxylic acids of formula I or anhydrides thereof in which the R groups contain from eight up to 24 carbon atoms and are different isomers or contain different numbers of carbon atoms.

8. A composition as claimed in claim 1 wherein the acid is a derivative of phthalic acid.

9. A composition as claimed in claim 1 or claim 8 wherein a single aliphatic substituent is bonded directly to the aromatic ring or is linked to the aromatic ring through a hetero linking group which is -O-, -S-, -CO- or -COO-.

10. A composition as claimed in any one of claims 1 to 9 wherein the particulate inorganic solid is a basic filler.

11. A composition as claimed in claim 10 wherein the particulate inorganic solid is a fire retardant material which liberates water on heating.

12. A composition as claimed in claim 11 wherein the particulate inorganic solid is hydrated alumina or magnesium hydroxide.

13. A composition as claimed in claim 1 wherein the particulate inorganic solid is a fire retardant material which liberates water on heating and the acid compound is a compound of general formula (I), or is the anhydride thereof, in which n has a value of zero and R is an alkenyl group or a mixture of alkenyl groups.

14. A polymer composition which contains a polymeric material and a composition as claimed in any one of claims 1 to 13.

15. A polymer composition as claimed in claim 14 wherein the polymeric material is an olefin polymer.

16. A polymer composition as claimed in claim 15 which comprises a propylene polymer, aluminium hydroxide or magnesium hydroxide and an acid of the general formula (I) or an anhydride thereof.

17. A polymer composition as claimed in claim 15 which comprises a propylene polymer, aluminium hydroxide or magnesium hydroxide and a monocyclic diacid having at least one aliphatic substituent or an anhydride thereof.

18. A shaped article formed from a polymer composition as claimed in any one of claims 14 to 17.